# EUROPEAN PATENT SPECIFICATION

(11) **EP 0 422 962 B1**
(45) Date of publication and mention of the grant of the patent: **25.08.1993**
(21) Application number: 90311252.2
(22) Date of filing: 15.10.1990
(51) Int. Cl.: F16D 27/14, F16D 27/10

(54) **Electromagnetic clutch**
Elektromagnetische Kupplung
Embrayage électromagnétique

(30) Priority: 13.10.1989 JP 119152/89 U
(43) Date of publication of application: 17.04.1991
(73) Proprietor: SANDEN CORPORATION, Isesaki-shi Gunma, 372 (JP)
(72) Inventor: Matsushita, Takashi, c/o Sanden Corporation, Isesaki-shi, Gunma 372 (JP)
(74) Representative: Jackson, Peter Arthur

(56) References cited:
- GB-A- 1 119 006
- US-A- 3 016 118
- US-A- 3 036 679
- US-A- 3 565 223

## Description

This invention relates to an electromagnetic clutch, such as for use in controlling the transmission of power from an automobile engine to a refrigerant compressor in an automobile air conditioning system, and more particularly, to the structure of an electromagnetic device of the electromagnetic clutch.

An electromagnetic clutch for use in controlling the transmission of power from an automobile engine to a refrigerant compressor in an automobile air conditioning system is illustrated in US-A-4799578. As illustrated in US-A-4799578, the electromagnetic clutch includes an electromagnetic device comprising an annular magnetic housing having a U-shaped cross section in order to contain an annular electromagnetic coil which supplies magnetic flux for attracting an armature plate to an axial end plate portion of a rotor, and an annular supporting plate on which the annular magnetic housing is firmly fixed by, for example, spot welding. The annular supporting plate is firmly secured to the axial end surface of compressor housing by a plurality of rivets.

The electromagnetic coil is intermittently activated in response to an automobile air conditioning demand, thereby intermittently supplying the magnetic flux for intermittently attracting the armature plate to the axial end plate portion of rotor. Accordingly, power of the automobile engine is intermittently transmitted to the refrigerant compressor through the electromagnetic clutch in response to the automobile air conditioning demand.

In order to generate the magnetic flux, the electromagnetic coil must be supplied with DC electric power from a battery on an automobile engine compartment through a wire, even though the battery and wire are not illustrated in the drawings of US-A-4799578. Therefore, one should consider the structure which serves for leading the wire from the electromagnetic device to the outside of the electromagnetic device.

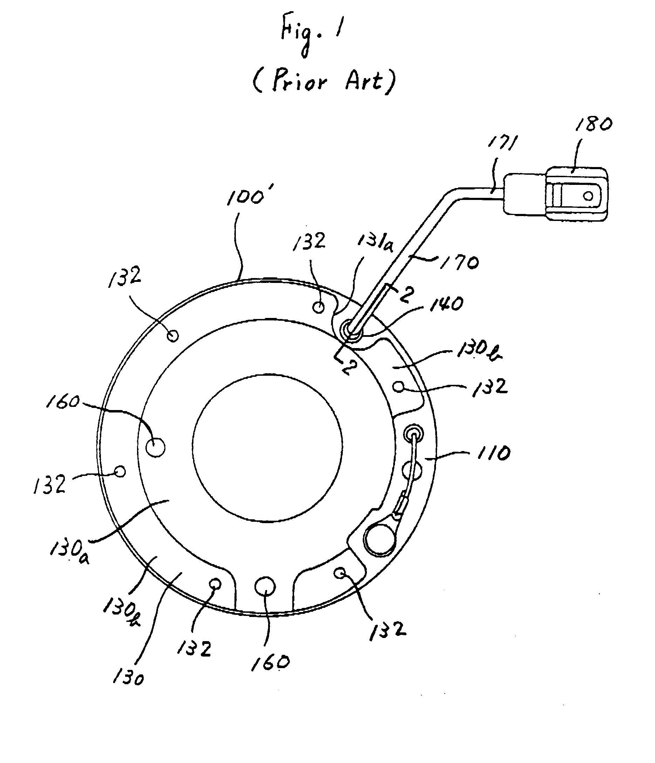

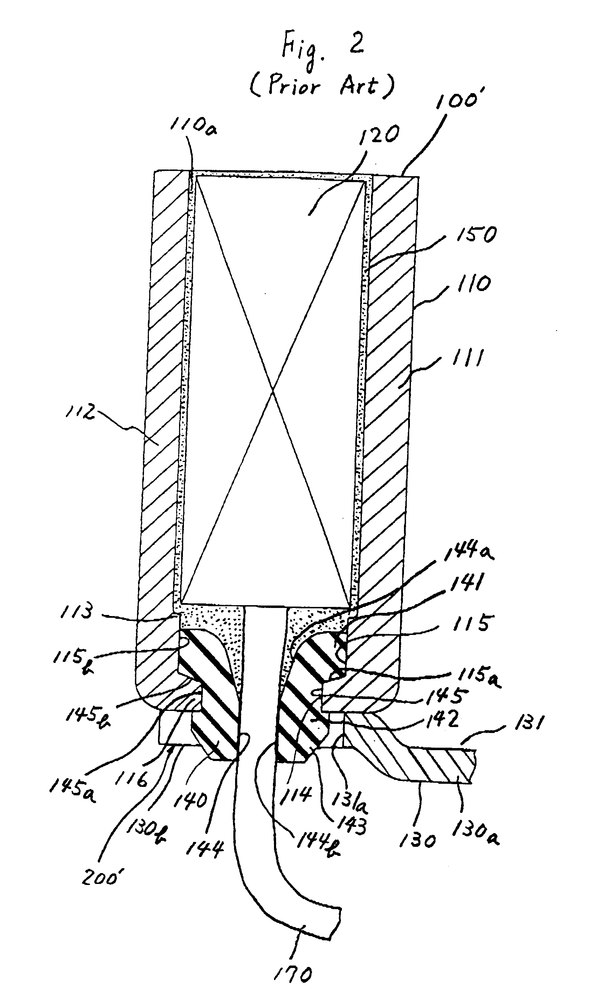

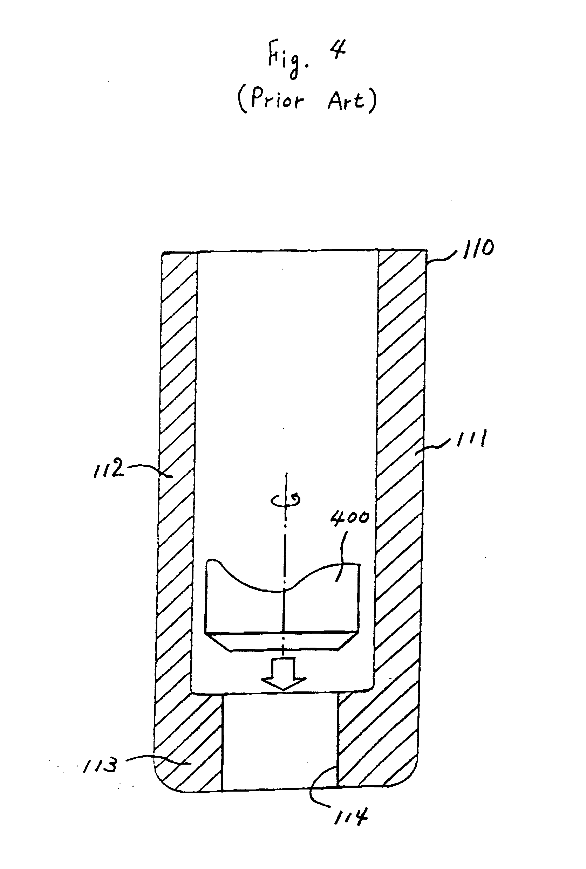

One prior art embodiment regarding the above mentioned structure is illustrated in Figures 1 and 2. Referring to Figures 1 and 2, an electromagnetic device 100' of an electromagnetic clutch includes an annular magnetic housing 110 having a U-shaped cross sections an electromagnetic coil 120 contained within the annular magnetic housing 110 and an annular supporting plate 130 to which the annular magnetic housing 110 is firmly fixed by, for example, spot welding. The annular magnetic housing 110 includes an inner annular cylindrical portion 111, an outer annular cylindrical portion 112 and an annular bottom end portion 113 connecting one end of the inner and outer annular cylindrical portions 111, 112. The annular supporting plate 130 is firmly secured to the axial end surface of a compressor housing (not shown) by a plurality of rivets (not shown). The thickness of the inner annular cylindrical portion 111 of the housing 110 is designed to be slightly greater than the thickness of the outer annular cylindrical portion 112 of the housing 110. A hole 114 is formed at a certain region of the bottom end portion 113 of the annular magnetic housing 110. A surface 115 concentric with the hole 114 is formed at a bottom end portion 113 by using a cutting tool 400 as shown in Figure 4. A bottom surface 115a of the surface 115 is slightly inclined towards a centre thereof. Consequently, an annular flange 116 inwardly extending from inner side wall 115b of the surface 115 is formed at a certain region of the bottom end portion 113 of annular magnetic housing 110.

A grommet 140 made of insulating material, for example, a rubber member, penetrates through the hole 114. The grommet 140 includes an upper cylindrical portion 141, a lower cylindrical portion 142 connected to a bottom end of the upper cylindrical portion, a truncated conical portion 143 connected to a bottom end of the lower cylindrical portion 142, a hole 144 centrally and axially formed there-through and an annular groove 145 formed at a boundary between the upper cylindrical portion 141 and the lower cylindrical portion 142. A diameter of the upper cylindrical portion 141 is designed to be greater than a diameter of the lower cylindrical portion 142. An annular upper surface 145b of the groove 145 is slightly inclined so as to be along a bottom surface 115a of the surface 115. The diameter of the annular bottom surface 145a of the groove 145 is slightly greater than a diameter of the hole 114. The diameter of the upper cylindrical portion 141 of the grommet 140 is slightly greater than the diameter of an inner side wall 115b of the surface 115. Accordingly, by utilizing elasticity of the rubber member, the upper cylindrical portion 141 of the grommet 140 is closely disposed within the surface 115 and the annular groove 145 engages the annular flange 116.

The annular supporting plate 130 includes a shallow cup-shaped region 130a defining an indent 131 at its upper side and an annular region 130b radially extending from a periphery of the shallow cup-shaped region 130a. The annular supporting plate 130 is provided with a semicircular cut-out portion 131a formed at an annular region 130b thereof. The semicircular cut-out portion 131a is aligned with the hole 114 to dispose the lower cylindrical portion 142 of the grommet 140 therein when the bottom end portion 113 of the annular magnetic housing 110 is firmly fixed to the annular region 130b of the annular supporting plate 130. The annular magnetic housing 110 is firmly fixed to the annular region 131a of the annular supporting plate 130 by spot welding, thereby forming a plurality of spot welds 132 as shown in Figure 1.

The annular flange 116 and semicircular cut-out portion 131a constitute an engaging mechanism 200' which can engage with the annular groove 145 of the grommet 140.

The hole 144 of the grommet 140 includes a truncated cone-shaped section 144a at its upper side and cylindrical section 144b at its lower side. The truncated cone-shaped section 144a gradually narrows downwardly and is connected to the cylindrical section 144b at its bottom end.

A cavity 110a defined by the annular magnetic housing 110 and the grommet 140 is filled with heated epoxy resin 150, which is hardened upon elapse of time with cooling, so as to fix the coil 120 therewithin.

As shown in figure 1, a pair of tiny identical projections 160 are formed at a bottom end surface of the annular supporting plate 130 so as to be received within a pair of tiny identical indents (not shown) formed at the axial end surface of the refrigerant compressor housing. Thereby, rotational movement of the electromagnetic device 100' is prevented.

A wire 170 led from a bottom end portion of the electromagnetic coil 120 closely penetrates through the hole 144 of the grommet 140. A terminal end 171 of the wire 170 is connected to a plug 180 which is connected to a terminal end of another wire (not shown) leading from a control apparatus (not shown) of an automobile air conditioning system.

Accordingly, the grommet 140 is used as an insulator, as a plug which can prevent leakage of the heated epoxy resin 150 through the hole 114 from the inside of the housing 110 and as a holder which can firmly hold the wire 170.

By virtue of operation of the control apparatus of the automobile air conditioning system, the electromagnetic coil 120 is intermittently activated in response to the automobile air conditioning demand. Therefore, power of the automobile engine is intermittently transmitted to the refrigerant compressor through the electromagnetic clutch in response to the automobile air conditioning demand.

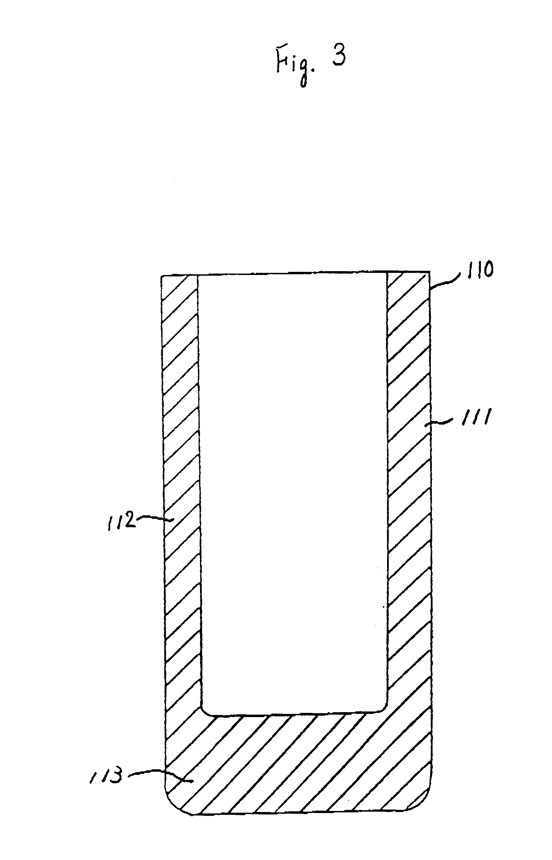

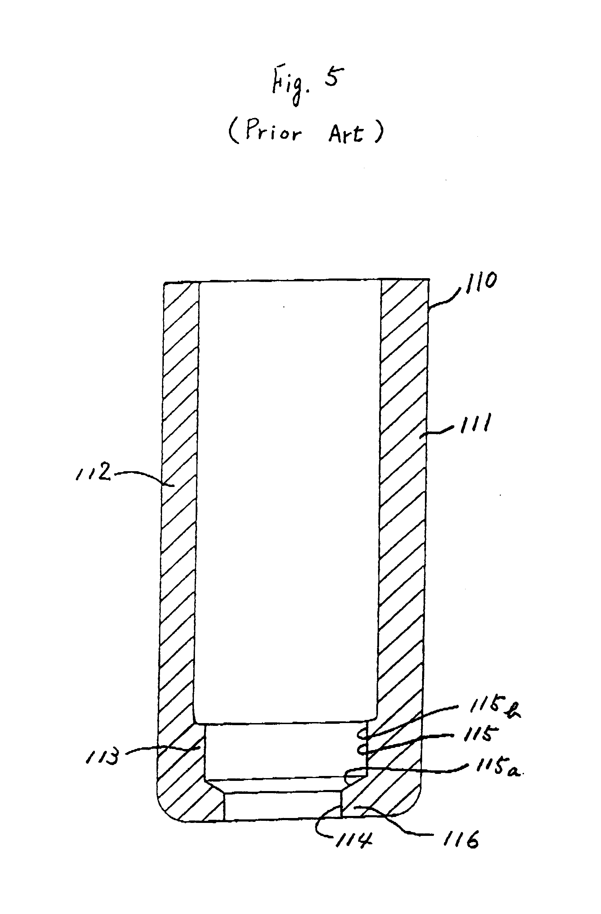

The engaging mechanism 200' is formed as follows. First, referring to Figures 3 and 4, hole 114 is formed in the bottom end portion 113 of the annular magnetic housing 110 by punching out by press working. Then, referring to Figures 4 and 5, the surface 115 concentric with the hole 114 is formed at the bottom end portion 113 of the annular magnetic housing 110 by using a cutting tool 400. Consequently, the annular flange 116 is formed at a bottom end surface of the bottom end portion 113 of the annular magnetic housing 110 as shown in Figure 5. Next, referring to Figures 1 and 2, a semi-circular cut-out portion 131a is formed at an annular region 130b of the annular supporting plate 130 by punching out by press working. Finally, the bottom end portion 113 of the housing 110 is firmly fixed to the annular region 130b of the supporting plate 130 by spot welding with the hole 114 aligned with the semicircular cut-out portion 131a as shown in Figure 1. Thus, the engaging mechanism 200' is formed at the bottom end surface of the bottom end portion 113 of the annular magnetic housing 110 as shown in Figure 2.

As described above, in this prior art embodiment, it is required not only to use only the press but also to use a cutter 400 of Figure 4 in order to form the engaging mechanism 200'. Therefore, a manufacturing process of the electromagnetic device 100' of the electromagnetic clutch is complicated.

Accordingly, it is an object of this invention to provide a simple manufacturing process of an electromagnetic device of an electromagnetic clutch.

According to the invention, an electromagnetic clutch including an electromagnetic device comprising an annular magnetic housing having a U-shaped cross section, an annular supporting plate on which a bottom end portion of the annular magnetic housing is firmly attached, and a grommet having an annular groove at its outer peripheral surface, with engaging means engaging with the annular groove of the grommet; is characterised in that besides the engaging means there is provided a first circular hole formed through the bottom end portion of the annular magnetic housing and a concentric second circular hole formed through the annular supporting plate, the diameter of the first circular hole being greater than the diameter of the second circular hole, thereby forming on the annular supporting plate a radially inwardly projecting annular projection providing the engaging means which is received in the annular groove.

The first and second circular holes are preferably formed by press working.

In the accompanying drawings:
Figure 1 illustrates a bottom plan view of an electromagnetic device of an electromagnetic clutch in accordance with one prior art embodiment;
Figure 2 illustrates an enlarged fragmentary vertical sectional view taken on the line 2-2 in Figure 1;
Figures 3 to 5 illustrate the U-shaped annular magnetic housing in each manufacturing process of the prior art embodiment;
Figure 6 illustrates a bottom plan view of an electromagnetic clutch in accordance with one embodiment of the present invention;
Figure 7 illustrates an enlarged fragmentary vertical sectional view taken on the line 7-7 in Figure 6; and,
Figures 8 to 10 illustrate the electromagnetic device in each manufacturing process of the one embodiment of the present invention.

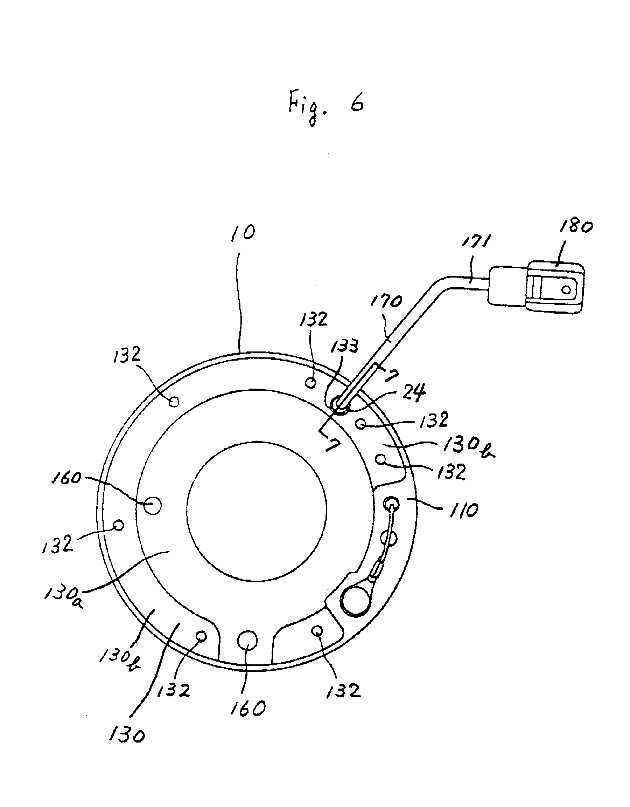

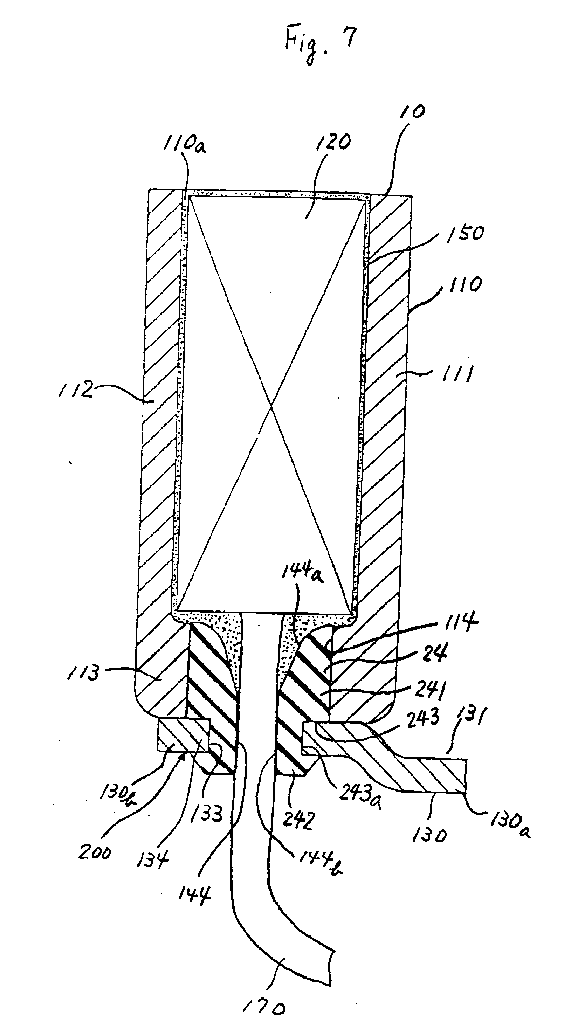

Figures 6 and 7 illustrate the structure of an electromagnetic device of an electromagnetic clutch in accordance with one embodiment of the present invention. In Figures 6 the same numerals are used to denote the corresponding elements shown in Figures 1 and 2, and thus an explanation thereof is omitted.

Referring to Figures 6 and 7, an electromagnetic device 10 of an electromagnetic clutch includes an annular magnetic housing 110 having a hole 114 formed at a bottom end portion 113 thereof and a grommet 24 penetrates through the hole 114. The grommet 24 made of insulating material, for example, a rubber member, comprises a cylindrical portion 241, a truncated cone-shaped portion 242, a hole 144 centrally and axially formed therethrough and an annular groove 243 formed at a boundary between the cylindrical portion 241 and the truncated cone-shaped portion 242.

An annular supporting plate 130 is provided with a circular hole 133 formed at an annular region 130b thereof. The annular magnetic housing 110 is firmly fixed to the annular region 130b of the annular supporting plate 130 by spot welding with the hole 114 concentrically aligned with the hole 133. The diameter of the hole 133 is smaller than the diameter of the hole 114. Consequently, an annular projection 134, projecting from an inner peripheral surface of the hole 114, is formed at the bottom end surface of the end portion 113 of the housing 110. The function of the annular projection 134 is similar to the function of the engaging mechanism 200' in the prior art.

The diameter of the circular hole 133 is slightly smaller than the diameter of the bottom end surface 243a of the groove 243. The width of the groove 243 is slightly smaller than the thickness of the annular region 130b of the annular supporting plate 130. Furthermore, the diameter of the cylindrical portion 241 of the grommet 24 is designed to be slightly greater than the diameter of the hole 114. Accordingly, by utilizing the elasticity of the rubber member, the cylindrical portion 241 of the grommet 24 is closely disposed within the hole 114 and the annular groove 243 of the grommet 24 is closely engaged with the annular projection 134.

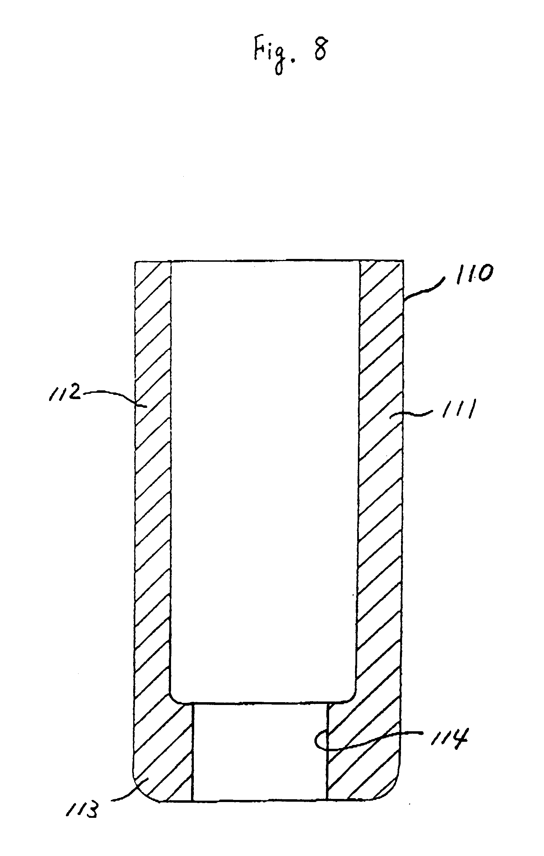

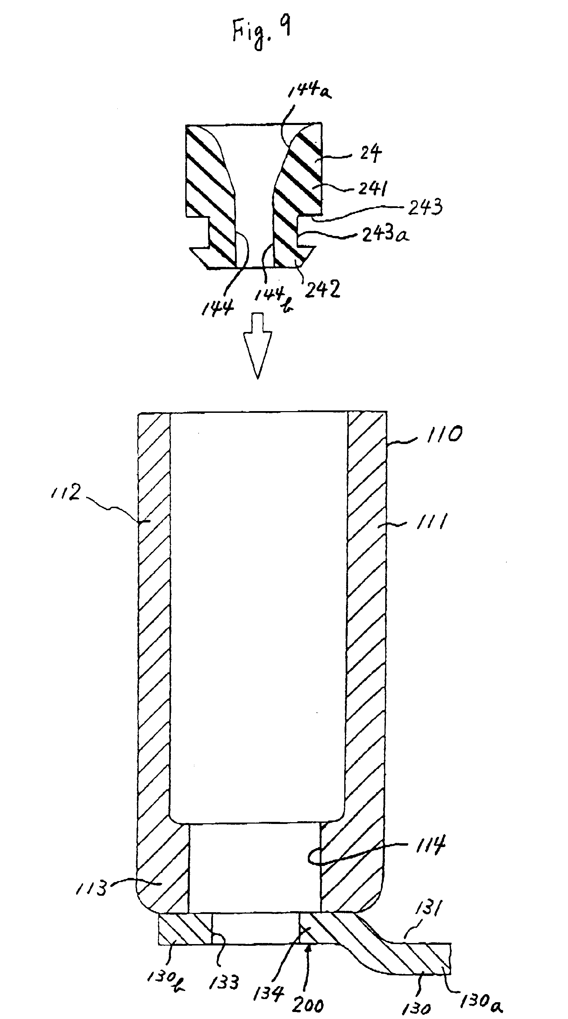

The engaging mechanism 200 is formed as follows. First, referring to Figures 3 and 8, the hole 114 is formed at the bottom end portion 113 of the housing 110 by punching out by press working. Then, referring to Figure 9, the hole 133 is formed at an annular region 130b of the supporting plate 130 by punching out by press working. Finally, the bottom end portion 113 of the housing 110 is firmly fixed to the annular region 130b of the supporting plate 130 by spot welding with the hole 114 concentrically aligned with the hole 133. Consequently, the annular projection 134, projecting from the inner peripheral surface of the hole 114, is formed at the bottom end surface of the bottom end portion 113 of the housing 110 as shown in Figure 9. Thus, engaging mechanism 200 is formed at the bottom end surface of bottom end portion 113 of housing 110 as shown in Figure 9.

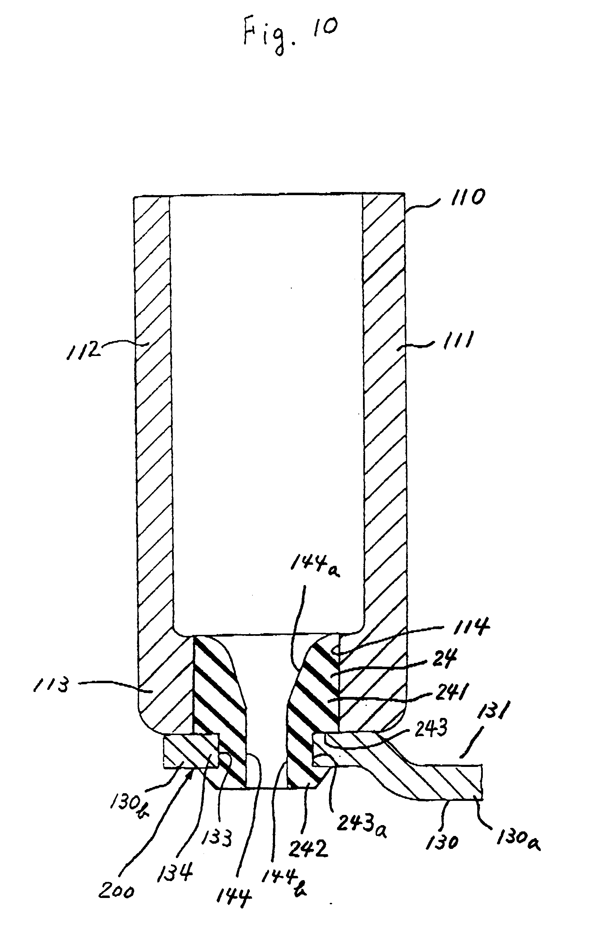

Furthermore, referring to Figures 9 and 10, by utilizing the elasticity of the rubber member, the cylindrical portion 241 of the grommet 24 is closely disposed within the hole 114, and the annular groove 243 of the grommet 24 is closely engaged with the annular projection 134.

As described above, in this preferred embodiment of the present invention, it is not required to use any cutting tool 400, as shown in Figure 4, in order to form the engaging mechanism 200. It is only required to use a press. Therefore, the electromagnetic device 10 of the electromagnetic clutch is manufactured by a simple manufacturing process.

Furthermore, since the diameter of the circular hole 133 of the supporting plate 130 is slightly smaller than the diameter of the bottom end surface 243a of the groove 243 of the grommet 24, the area of the cut-out region defining the circular hole 133 is sufficiently small in comparison with the area of the cut-out cutout region defining the semicircular cut-out portion 131a of the supporting plate of the prior art embodiment. Therefore, the strength of the supporting plate 130 is increased in comparison with the supporting plate of the prior art embodiment. In addition, the spot welding can further be done at an annular region 130b of the supporting plate 130 as shown in Figure 6. Thereby, the bottom end portion 113 of housing 110 is further firmly fixed to the annular region 130b of the supporting plate 130.

## Claims

1. An electromagnetic clutch including electromagnetic device (10) comprising an annular magnetic housing (110) having a U-shaped cross section, an annular supporting plate (130) on which a bottom end portion (113) of the annular magnetic housing (110) is firmly attached, and a grommet (24) having an annular groove (243) at its outer peripheral surface, with engaging means (134) engaging with the annular groove (243) of the grommet (24); characterised in that besides the engaging means (134) there is provided a first circular hole (114) formed through the bottom end portion (113) of the annular magnetic housing (110) and a concentric second circular hole (133) formed through the annular supporting plate (130), the diameter of the first circular hole (114) being greater than the diameter of the second circular hole (133), thereby forming, on the annular supporting plate (130), a radially inwardly projecting annular projection providing the engaging means (134) which is received in the annular groove (243).

2. A clutch according to claim 1, wherein both the first and second circular holes (114,133) have been formed by pressing.

## Patentansprüche

1. Elektromagnetische Kupplung mit einer elektromagnetischen Einrichtung (10), die ein ringförmiges magnetisches Gehäuse (110) mit einem U-förmigen Querschnitt, eine ringförmige Tragplatte (130), auf der ein Bodenendabschnitt (113) des ringförmigen magnetischen Gehäuses (110) fest angebracht ist, und eine Durchführungsdichtung (24) mit einer ringförmigen Rille (243) an ihrer äußeren Umfangsoberfläche aufweist, wobei ein Eingreifmittel (134) mit der ringförmigen Rille (243) der Durchführungsdichtung (24) in Eingriff steht;
dadurch gekennzeichnet, daß neben den Eingreifmittel (134) ein durch den Bodenabschnitt (113) des ringförmigen magnetischen Gehäuses (110) gebildetes erstes kreisförmiges Loch (114) und ein durch die ringförmige Tragplatte (130) konzentrisches zweites kreisförmiges Loch (133) vorgesehen ist, wobei der Durchmesser des ersten kreisförmigen Loches (114) größer als der Durchmesser des zweiten kreisförmigen Loches (133) ist, wodurch auf der ringförmigen Tragplatte (130) ein radial nach innen vorstehender das Eingreifmittel darstellender ringförmiger Vorsprung (134) gebildet ist, der in der ringförmigen Rille (243) aufgenommen ist.

2. Kupplung nach Anspruch 1, bei der sowohl das erste als auch zweite kreisförmige Loch (114, 133) durch Pressen gebildet sind.

## Revendications

1. Embrayage électromagnétique utilisant un dispositif électromagnétique (10) comprenant un carter magnétique annulaire (110) présentant une section transversale en forme de U, une plaque de support annulaire (130) sur laquelle est solidement fixée la partie d'extrémité inférieure (113) du carter magnétique annulaire (110), et une garniture d'étanchéité (24) munie d'une rainure annulaire (243) à sa surface périphérique extérieure, avec des moyens d'engagement (134) s'engageant dans la rainure annulaire (243) de la garniture d'étanchéité (24) ; embrayage électromagnétique caractérisé en ce qu'en plus des moyens d'engagement (134), on utilise un premier trou circulaire (114) percé dans la partie d'extrémité inférieure (113) du carter magnétique annulaire (110), et un second trou circulaire concentrique (133) percé dans la plaque de support annulaire (130), le diamètre du premier trou circulaire (114) étant supérieur au diamètre du second trou circulaire (133) pour former ainsi, sur la plaque de support annulaire (130), une saillie annulaire dépassant radialement vers l'intérieur et formant les moyens d'engagement (134) qui viennent se loger dans la rainure annulaire (243).

2. Embrayage selon la revendication 1, caractérisé en ce que le premier trou circulaire (114) et le second trou circulaire (133) ont tous deux été formés par emboutissage à la presse.
